# EUROPEAN PATENT APPLICATION

(11) **EP 4 525 063 A1**
(43) Date of publication of application: **19.03.2025**
(21) Application number: 23806574.2
(22) Date of filing: 09.03.2023
(51) Int. Cl.: H01M 4/04, H01M 4/139

(54) **MARKING DEVICE AND ELECTRODE SHEET PRODUCTION SYSTEM**

(30) Priority: 16.05.2022 CN 202221173323 U
(71) Applicant: Contemporary Amperex Technology (Hong Kong) Limited, Hong Kong (HK)
(72) Inventor: WANG, Jianlei, Ningde, Fujian 352100 (CN); LIAO, Ruhu, Ningde, Fujian 352100 (CN); WEI, Jingjing, Ningde, Fujian 352100 (CN); ZENG, Gang, Ningde, Fujian 352100 (CN); CAI, Quanshui, Ningde, Fujian 352100 (CN); DAI, Ya, Ningde, Fujian 352100 (CN); CHEN, Guangsheng, Ningde, Fujian 352100 (CN)
(74) Representative: Gong, Jinping
(86) International application number: PCT/CN2023/080574
(87) International publication number: WO 2023/221614

(57) **Abstract**

The present application provides a marking device and an electrode sheet production system, which belongs to the field of battery production equipment. The marking device includes a vibration mechanism and a cutter head. The vibration mechanism is provided on a side of the electrode sheet provided with the active material layer along the thickness direction of the electrode sheet. The cutter head is connected to the vibration mechanism and the cutter head extends in a width direction of the electrode sheet. The vibration mechanism is configured to drive the cutter head to vibrate in a thickness direction of the electrode sheet and to allow the cutter head to contact the electrode sheet, thus forming a score on the electrode sheet. Using this structure, the marking mechanism does not need to mark the electrode sheet through laser marking technology, thereby alleviating the phenomenon of heat-affected zones formed on the electrode sheet after laser ablation. It is conducive to reducing the damage suffered by the electrode sheet during the marking process, which in turn can effectively improve the production quality of the electrode sheet. In addition, the use of a vibration mechanism to drive the cutter head to oscillate the active material layer to mark the electrode sheet can be conducive to improving the marking speed of the electrode sheet, thereby effectively improving the marking efficiency of the electrode sheet.

## Description

### CROSS-REFERENCE TO RELATED APPLICATION

The present application claims the priority to the Chinese patent application with the filling No. 202221173323.7 filed with the Chinese Patent Office on May 16, 2022, and entitled "MARKING DEVICE AND ELECTRODE SHEET PRODUCTION SYSTEM", the contents of which are incorporated herein by reference in entirety.

### TECHNICAL FIELD

The present application relates to the technical field of battery production devices, and in particular to a marking device and an electrode sheet production system.

### BACKGROUND ART

Batteries have prominent advantages such as high energy density, low environmental pollution, high power density, long service life, broad applicability, and low self-discharge coefficient. They are an important component of the current development of new energy sources. The battery cell of a battery is obtained by assembling positive electrode sheets, negative electrode sheets, and separators through winding or stacking methods to form an electrode assembly (winding battery cell or laminated battery cell), then loading the resultant into the shell, then covering the end cap, and finally injecting the electrolyte.

Due to the advantages of high rate and high energy density of laminated battery cells compared with winding battery cells, and the advantage that the laminated battery cells can also be made into various shaped batteries according to different needs, the laminated battery cells are commonly used in the industry to make batteries. Conventional laminating equipment usually uses laser marking technology to mark the electrode sheets (i.e., making scores). In other words, by the high temperature generated by the highly focused laser beam, the active material layer on one side of the electrode sheet is ablated, thereby forming scores on one side of the electrode sheet so as to facilitate the stacking of electrode sheets. However, the use of such a marking method is very likely to result in the formation of a heat-affected zone of the active material layer on one side of the electrode sheet after being ablated by the laser, and it is very likely to cause damage to the electrode sheet, thus resulting in the production of the electrode sheet with poor quality.

### SUMMARY

The embodiments of the present application provide a marking device and an electrode sheet production system, which can effectively improve the production quality of electrode sheets.

In a first aspect, the embodiments of the present application provide a marking device, configured for making scores on an electrode sheet. The electrode sheet comprises a current collector and an active material layer, wherein at least one side of the current collector is provided with the active material layer along a thickness direction of the electrode sheet; and the marking device comprises a vibration mechanism and a cutter head. The vibration mechanism is provided on a side of the electrode sheet provided with the active material layer along the thickness direction of the electrode sheet. The cutter head is connected to the vibration mechanism, and the cutter head extends in a width direction of the electrode sheet. The vibration mechanism is configured to drive the cutter head to vibrate in the thickness direction of the electrode sheet and to enable the cutter head to contact the electrode sheet so as to form a score on the electrode sheet.

In the above technical solution, by arranging the vibration mechanism on the side of the electrode sheet provided with the active material layer, the vibration mechanism is enabled to drive the cutter head to oscillate and extrude the active material layer of the electrode sheet along the thickness direction of the electrode sheet. It is enabled to form a score at the position where the active material layer is extruded in order to satisfy the requirement of stacking. Using this structure, the marking mechanism does not need to mark the electrode sheet through laser marking technology, thereby alleviating the phenomenon of heat-affected zones formed on the electrode sheet after laser ablation. It helps to reduce the damage of the electrode sheet in the process of marking, and then can effectively improve the production quality of the electrode sheet. In addition, the use of a vibration mechanism to drive the cutter head to oscillate the active material layer to mark the electrode sheet can be conducive to improving the marking speed of the electrode sheet, thereby effectively improving the marking efficiency of the electrode sheet.

In some embodiments, the cutter head is configured to vibrate in the thickness direction of the electrode sheet and contact the active material layer to reduce or remove the active material layer from the extruded part and form the score.

In the above-described technical solution, the vibration and extrusion of the active material layer by the cutter head can remove or reduce the active material layer at the corresponding position so as to form a score on one side of the electrode sheet. This facilitates the stacking process of the electrode sheet and thus can effectively alleviate the damage suffered by the electrode sheet in the marking process.

In some embodiments, the cutter head is detachably connected to the vibration mechanism.

In the above technical solution, by detachably connecting the cutter head to the vibration mechanism to realize rapid disassembly and replacement of the cutter head, it is beneficial to repair the cutter head in the later use process. Moreover, it is convenient to replace the cutter head of different models to meet the demand for manufacturing different models of electrode sheets so as to be able to effectively enhance the scope of applicability of the marking device.

In some embodiments, the vibration mechanism is an ultrasonic transducer.

In the above technical solution, an ultrasonic transducer is used as a vibration mechanism to drive the cutter head to vibrate along the thickness direction of the electrode sheet, so that the vibration mechanism can drive the cutter head to carry out high-frequency oscillation, with a better vibration effect. Therefore, the cutter head removes the active material layer to be faster, which is in turn conducive to improving the marking efficiency of the marking device on the electrode sheet.

In some embodiments, the marking device further comprises a mounting bracket; along the thickness direction of the electrode sheet, the vibration mechanism is provided on the mounting bracket in a positionally adjustable manner so as to adjust the distance between the cutter head and the electrode sheet.

In the above technical solution, by arranging the vibration mechanism on the mounting bracket in a positionally adjustable manner along the thickness direction of the electrode sheet, the distance between the cutter head and the electrode sheet can be adjusted so as to meet the demand for marking the electrode sheets of different thicknesses. Moreover, the phenomenon of scratching between the cutter head and the electrode sheet can be effectively reduced, thereby conducive to improving the production quality of the electrode sheets.

In some embodiments, the marking device further comprises an adjusting mechanism. The adjusting mechanism is connected to the vibration mechanism, and the adjusting mechanism is configured to drive the vibration mechanism to move relative to the mounting bracket along the thickness direction of the electrode sheet, so as to drive the cutter head closer to or further away from the electrode sheet.

In the above technical solution, the marking device is further provided with an adjusting mechanism, and the adjusting mechanism can drive the vibration mechanism to automatically move relative to the mounting bracket along the thickness direction of the electrode sheet, so as to realize automatic adjustment of the distance between the cutter head and the electrode sheet. Therefore, it is able to enhance the degree of automation of the marking device, which is conducive to saving manpower.

In some embodiments, the active material layer is provided on both sides of the current collector along the thickness direction of the electrode sheet; the marking device comprises two vibration mechanisms and two cutter heads. Each side of the electrode sheet is provided with one of the two vibration mechanisms along a thickness direction of the electrode sheet. Each of the two cutter heads is respectively connected to one of the two vibration mechanisms so as to form the scores on both sides of the electrode sheet.

In the above technical solution, the vibration mechanisms are provided on both sides of the electrode sheet, and each vibration mechanism is connected with a cutter head. Therefore, it is able to meet the marking of both sides of the electrode sheet so as to form the scores on both sides of the electrode sheet. The structure of the marking device can greatly optimize the production beat of the electrode sheet in the process of marking, which is then conducive to improving the marking efficiency and production efficiency of the electrode sheet.

In some embodiments, the two cutter heads are provided at intervals along a conveying direction of the electrode sheet.

In the above technical solution, by arranging the two cutter heads at intervals along the conveying direction of the electrode sheet, it is possible to effectively reduce the influence of interference between the two cutter heads, and it is easy to mount and debug the vibration mechanism and the cutter head. In addition, the marking device with this structure is capable of forming the scores in a staggered arrangement on both sides of the electrode sheet to meet different stacking needs.

In some embodiments, the marking device further comprises a support member; the support member is arranged in one-to-one correspondence with the cutter head. The support member and the cutter head are oppositely arranged on two sides of the electrode sheet along the thickness direction of the electrode sheet, and the support member is configured to support the electrode sheet.

In the above technical solution, by arranging a support member corresponding to each cutter head and arranging the support member and the cutter head relative to each other along the thickness direction of the electrode sheet, the support members can play a better supporting role in the process during which the cutter head marks the electrode sheet, which is conducive to improving the quality of the marking of the electrode sheet.

In some embodiments, the two cutter heads are arranged opposite to each other along the thickness direction of the electrode sheet, wherein a distance between the two cutter heads, along the thickness direction of the electrode sheet, is greater than a thickness of the electrode sheet.

In the above technical solution, by arranging each of the two cutter heads, opposite to each other, on each side of the electrode sheet along the thickness direction of the electrode sheet, the two cutter heads can cooperate with each other to play a certain supporting role for the electrode sheet, and each side of the electrode sheet is formed with the score arranged oppositely so as to facilitate the marking device to mark the score on both sides of the electrode sheet, thus effectively improving the quality of the marking. In addition, by setting the distance between the two cutter heads to be greater than the thickness of the electrode sheet, the phenomenon of the scraping between the cutter heads and the electrode sheet can be effectively reduced so as to improve the production quality of the electrode sheet.

In a second aspect, the embodiments of the present application further provide an electrode sheet production system comprising a conveying device and the marking device as described above, wherein the conveying device is configured to convey the electrode sheets.

In some embodiments, the electrode sheet production system further comprises a dust removal device. The dust removal device is provided downstream to the marking device along the conveying direction of the electrode sheet, wherein the dust removal device is configured to dust the side of the electrode sheet production system provided with the cutter head.

In the above technical solution, the electrode sheet production system is further provided with a dust removal device, and the dust removal device is provided downstream to the marking device, so that the dust removal device is capable of removing dust from the side of the electrode sheet production system provided with the score so as to reduce the dust attached to the electrode sheet after the marking process is complete, which is in turn conducive to improving the production quality of the electrode sheet production system.

In some embodiments, the dust removal device comprises a support roller and an ultrasonic duster. The ultrasonic duster and the support roller are oppositely arranged on two sides of the electrode sheet along the thickness direction of the electrode sheet, and the ultrasonic duster and the cutter head are arranged on the same side of the electrode sheet.

In the above technical solution, the dust removal device is provided with a support roller and an ultrasonic duster; the support roller is provided on one side of the electrode sheet and the ultrasonic duster is arranged on the other side of the electrode sheet at a location corresponding to the support roller, so as to enable the ultrasonic duster to remove the dust on the side of the electrode sheet provided with the score. The dust removal device with this structure can, on the one hand, increase the effect of dust removal of the electrode sheet. On the other hand, it can reduce the damage to the electrode sheet caused by the dust removal device in the process of dust removal.

In some embodiments, the electrode sheet production system comprises two dust removal devices, wherein the two dust removal devices are arranged at intervals along the conveying direction of the electrode sheet, and the ultrasonic dusters of the two dust removal devices are respectively arranged on each side of the electrode sheet in the thickness direction of the electrode sheet production system.

In the above technical solution, two dust removal devices are sequentially arranged downstream to the marking device along the conveying direction of the electrode sheet, and the ultrasonic dusters of the two dust removal devices are respectively located on each side of the electrode sheet so as to be able to remove the dust on both sides of the electrode sheet, which is conducive to further improving the quality of dust removing on the electrode sheet.

In some embodiments, the electrode sheet production system further comprises a labeling device and a detecting device. The labeling device is arranged upstream to the marking device along the conveying direction of the electrode sheet, wherein the labeling device is configured to form a label on the electrode sheet at a location to be marked. The detecting device is arranged between the labeling device and the marking device along the conveying direction of the electrode sheet, and the detecting device is configured to detect the label and generate a control signal. The marking device is configured to form the score at the location to be marked based on the control signal.

In the above technical solution, the electrode sheet production system is further provided with a labeling device and a detecting device. The labeling device can label the electrode sheet at the location to be marked, and detect and feedback through the detecting device. Therefore, the vibration mechanism can drive the cutter head to form a score on the electrode sheet at the location to be marked. Thus, it can effectively improve the marking precision of the electrode sheet, which is conducive to improving the production quality of the electrode sheet.

In some embodiments, the labeling device comprises a hole-making mechanism, wherein the hole-making mechanism is configured to form an identification hole on the electrode sheet at the location to be marked, and the detecting device is configured to detect the identification hole and generate the control signal.

In the above technical solution, a hole-making mechanism is used as a labeling device to open an identification hole on the electrode sheet at the location to be marked, thereby labeling the electrode sheet at the location to be marked. The structure of the labeling device is simple and easy to realize, which facilitates detection of the identification holes, formed at the location to be marked, by the detecting device. Thus, the detecting accuracy of the detecting device can be effectively improved.

### BRIEF DESCRIPTION OF DRAWINGS

To more clearly illustrate the technical solutions of the embodiments of the present application, the following will briefly introduce the drawings used in the embodiments. It should be understood that the following drawings only show some embodiments of the present application, and therefore they should not be regarded as a limitation on the scope. Those ordinary skilled in the art can also obtain other related drawings based on these drawings without inventive effort.
FIG. 1 is a structural schematic diagram of an electrode sheet production system provided in some embodiments of the present application;
FIG. 2 is a front view of the electrode sheet production system provided in some embodiments of the present application;
FIG. 3 is a sectional view of an electrode sheet provided in some embodiments of the present application;
FIG. 4 is a partially enlarged view at part A of the electrode sheet production system shown in FIG. 1;
FIG. 5 is a structural schematic diagram of a marking device provided in some embodiments of the present application;
FIG. 6 is a structural schematic diagram of the marking device provided in some other embodiments of the present application; and
FIG. 7 is a structural schematic diagram of the marking device provided in some other embodiments of the present application.

Reference numbers: 100- electrode sheet production system; 10- marking device; 11-vibration mechanism; 12- cutter head; 13- mounting bracket; 14- adjusting mechanism; 15-support member; 20- electrode sheet; 21- current collector; 22- active material layer; 23- score; 30- dust removal device; 31- support roller; 32- ultrasonic duster; 40- labeling device; 41- hole-making mechanism; 42- waste material box; X- thickness direction of the electrode sheet; Y-conveying direction of the electrode sheet; Z- width direction of the electrode sheet.

### DETAILED DESCRIPTION OF EMBODIMENTS

In order to make the objective, technical solution, and advantages of the embodiments of the present application clearer, the following will provide a clear and complete description of the technical solution in the embodiments of the present application, in conjunction with the drawings in the embodiments of the present application. Obviously, the described embodiments are only a part of the embodiments of the present application, rather than all embodiments. Based on the embodiments in the present application, all other embodiments obtained by those of ordinary skill in the art without making inventive efforts are within the scope of protection of the present application.

Unless otherwise defined, all technical and scientific terms used herein have the same meaning as understood by those skilled in the art of the relevant technical field. The terms used in the summary of the present application are used for the purpose of describing specific embodiments and are not intended to limit the present application. The terms "comprise" and "provide" and their variations, as well as any other variations, are intended to cover non-exclusive inclusion in the summary and the claims of the present application, as well as in the drawings. The terms "first", "second", etc., used in the summary and claims of the present application, or in the above drawings, are used to distinguish between different objects and are not intended to describe a specific sequence or hierarchy.

The term "embodiment" used in the present application means that specific features, structures, or characteristics described in conjunction with the embodiment can be included in at least one embodiment of the present application. The use of this phrase in various parts of the summary does not necessarily refer to the same embodiment, nor does it imply that these embodiments are mutually exclusive or independent of each other.

In the description of the present application, it should be noted that, unless otherwise clearly stipulated and limited, the terms "provide", "interconnect", "connect" and "attach" should be understood in a broad sense, for example, it can be a fixed connection, a detachable connection, or an integral connection, and it can be a direct connection, an indirect connection through an intermediary, or an internal communication between two components. Those of ordinary skill in the art can understand the meanings of the above terms in the present application according to specific situations.

In the present application, the term "and/or" is used as a way to describe the relationship between associated objects, indicating that there can be three possible relationships. For example, "A and/or B" can represent: the presence of A, the presence of both A and B, or the presence of B. Additionally, the character "/" in the present application generally represents an "or" relationship between the preceding and following associated objects.

In the embodiments of the present application, identical reference numerals indicate the same components. For the sake of conciseness, detailed explanations of the same components are omitted in different embodiments. It should be understood that the dimensions such as thickness, length, and width of various components in the embodiments of the present application as shown in the drawings, as well as the overall dimensions such as thickness, length, and width of the integrated device, are provided as illustrative examples and should not be construed to limit the scope of the present application.

In the present application, the term "multiple" refers to two or more (including two).

The battery cell comprises a shell, an electrode assembly, and an electrolyte, and the shell is configured to accommodate the electrode assembly and the electrolyte. The electrode assembly is composed of a positive electrode sheet, a negative electrode sheet, and a separator. The battery cells work primarily on the movement of metal ions between the positive electrode sheet and the negative electrode sheet. The positive electrode sheet comprises a positive electrode current collector and a positive electrode active material layer. The positive electrode active material layer is coated on a surface of the positive electrode current collector. The portion of the positive electrode current collector not coated with the positive electrode active material layer serves as the positive electrode tab to realize the input or output of the electrical energy of the positive electrode sheet by the positive electrode tab. In the case of lithium-ion batteries, the material for the positive electrode current collector can be aluminum, and the positive active material can be lithium cobalt oxide, lithium iron phosphate, lithium manganese oxide, or lithium nickel cobalt manganese oxide, and so on. The negative electrode sheet comprises a negative electrode current collector and a negative electrode active material layer. The negative electrode active material layer is coated on a surface of the negative electrode current collector. The portion of the negative electrode current collector not coated with the negative electrode active material layer serves as the negative electrode tab to realize the input or output of the electrical energy of the negative electrode sheet by the negative electrode tab. The material of the negative electrode current collector can be copper, and the negative active material can be carbon or silicon, and so on. To ensure that there is no fuse blow during high current flow, the number of positive electrode tabs are plurality and stacked together, and the number of negative electrode tabs are plurality and stacked together.

The material of the separator can be PP (polypropylene), PE (polyethylene), and so on. Furthermore, the electrode assembly can be a wound structure or a stacked structure. The embodiments of the present application are not limited herein.

It is important to note that the electrode assembly is the component within the battery cell where the electrochemical reactions occur. The electrode assembly can comprise a positive electrode sheet, a separator, and a negative electrode sheet. The electrode assembly can be in the form of a wound structure formed by winding a positive electrode sheet, a separator, and a negative electrode sheet together, thus forming a winding battery cell. It can also be in the form of a stacked structure formed by a positive electrode sheet, a separator, and a negative electrode sheet in a stacking arrangement, thus forming a laminated battery cell.

Due to the advantages of high rate and high energy density of laminated battery cells compared with winding battery cells, the laminated battery cells can also be made into various shaped batteries according to different needs. Therefore, the laminated battery cells are commonly used in the industry to make batteries.

The inventors have found that in the production process of electrode assemblies of the laminating type, the conventional laminating equipment usually adopts an electrode-sheet punching and cutting machine to cut the electrode sheets for laminating. Although it can meet the requirements of the laminating, in the process of cutting the electrode sheet, the cut edge of the electrode sheet is prone to burrs, which leads to the poor production quality of the electrode sheet. Moreover, there is a high risk of the burrs on the electrode sheet damaging the separator. In order to address the risk of burrs of the cut edge appearing on the electrode sheet, in the prior art, cutting of the electrode sheet is eliminated by marking the active material layer on both sides of the electrode sheet (i.e., forming the scores on the surface of the electrode sheet). This facilitates the stacking of the electrode sheets. The existing electrode sheets are usually marked by laser marking technology. In other words, by the high temperature generated by the highly focused laser beam, the active material layer on one side of the electrode sheet is ablated, thereby forming scores on one side of the electrode sheet. However, the use of such a marking method is very likely to result in the formation of a heat-affected zone of the active material layer on one side of the electrode sheet after being ablated by the laser, and it is very likely to cause damage to the electrode sheet, thus resulting in poor marking quality of the electrode sheet. This is not conducive to improving the production quality of the electrode sheet.

Based on the above considerations, in order to solve the problem of poor production quality of the electrode sheet, the inventors, after in-depth research, designed a marking device including a vibration mechanism and a cutter head. The vibration mechanism is arranged, along the thickness direction of the electrode sheet, on the side of the electrode sheet provided with an active material layer. The cutter head is connected to the vibration mechanism and the cutter head extends in a width direction of the electrode sheet. The vibration mechanism is configured to drive the cutter head to vibrate in a thickness direction of the electrode sheet and to allow the cutter head to contact the electrode sheet, thus forming a score on the electrode sheet.

In a marking device of this structure, by arranging the vibration mechanism on the side of the electrode sheet provided with the active material layer, the vibration mechanism is enabled to drive the cutter head to oscillate the active material layer of the electrode sheet along the thickness direction of the electrode sheet, so that the active material of the active material layer at the position corresponding to the cutter head is detached from the current collector, thereby enabling removal of the active material layer of the electrode sheet and formation of the score to satisfy the stacking requirements. Using this structure, the marking mechanism does not need to mark the electrode sheet through laser marking technology, thereby alleviating the phenomenon of heat-affected zones formed on the electrode sheet after laser ablation. It helps to reduce the damage of the electrode sheet in the process of marking, and then can effectively improve the production quality of the electrode sheet.

In addition, the use of a vibration mechanism to drive the cutter head to oscillate the active material layer to mark the electrode sheet can be conducive to improving the marking speed of the electrode sheet, thereby effectively improving the marking efficiency of the electrode sheet.

The embodiments of the present application provide an electrode sheet production system, which can improve the problem where existing electrode sheet production system in the process of marking the electrode sheet is very easy to damage the electrode sheet, thus leading to the production of poor quality of the electrode sheet. The following combines the drawings of the specific structure of the electrode sheet production system to explain in detail.

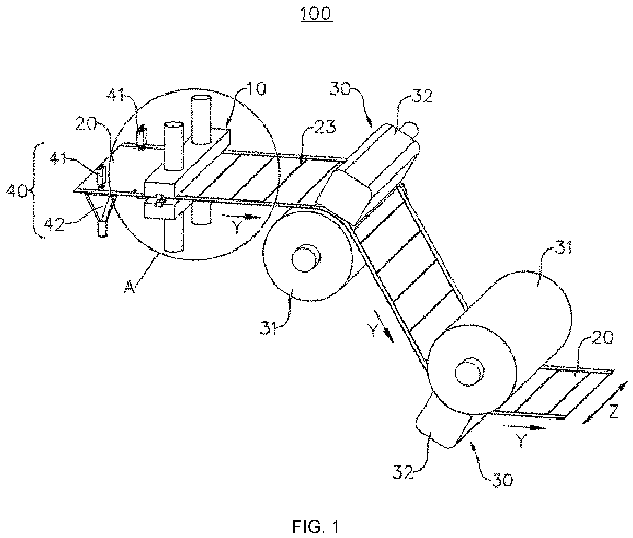

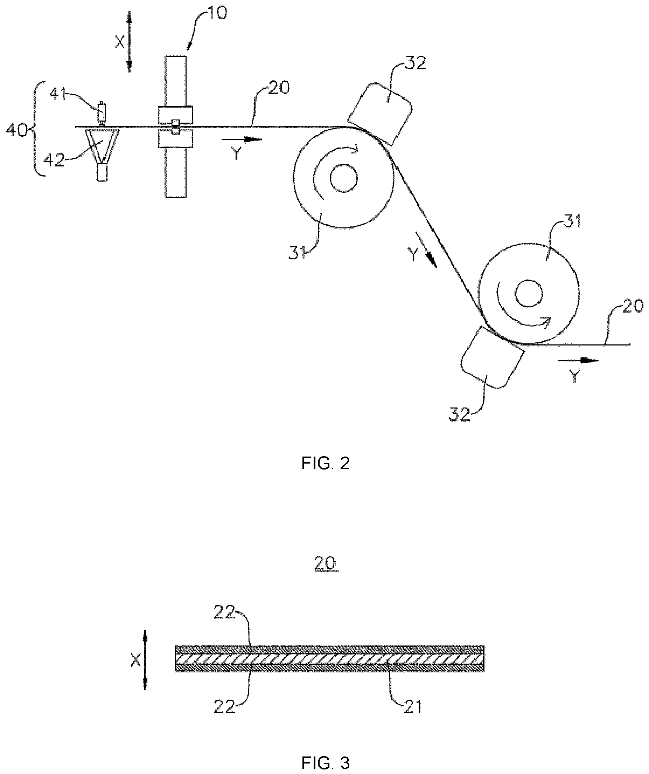

Referring to FIGS. 1 and 2, FIG. 1 is a structural schematic diagram of an electrode sheet production system 100 provided in some embodiments of the present application. FIG. 2 is a front view of the electrode sheet production system 100 provided in some embodiments of the present application. The embodiments of the present application provide an electrode sheet production system 100, wherein the electrode sheet production system 100 comprises a marking device 10 and a conveying device. The conveying device is configured for conveying the electrode sheet 20, and the marking device 10 is configured for marking the electrode sheet 20.

In some embodiments, referring to FIG. 3, FIG. 3 is a sectional view of an electrode sheet 20 provided in some embodiments of the present application. The electrode sheet 20 comprises a current collector 21 and an active material layer 22, wherein at least one side of the current collector 21 is provided with the active material layer 22 along a thickness direction X of the electrode sheet.

Exemplarily, in FIG. 3, both sides of the current collector 21 are coated with the active material layer 22 along the thickness direction X of the electrode sheet.

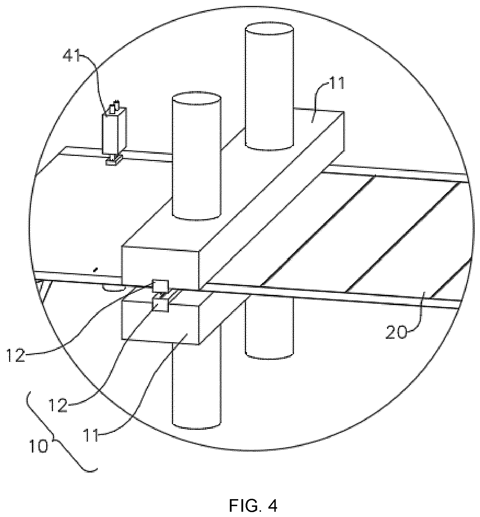

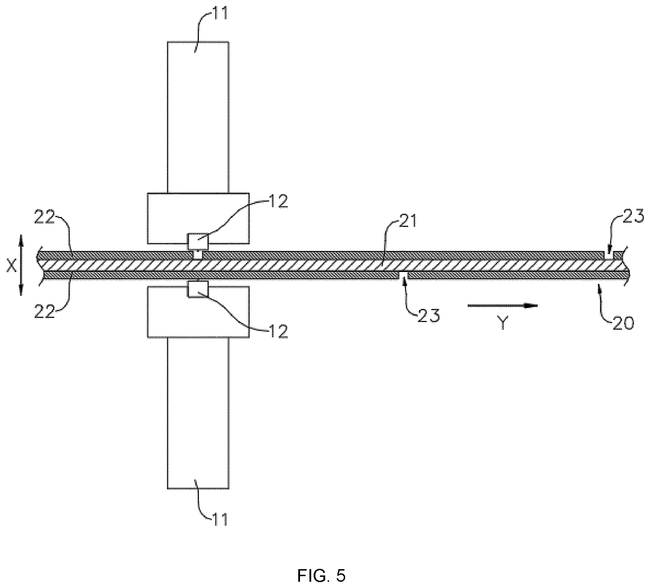

According to some embodiments of the present application, with reference to FIGS. 1 and 2, and with further reference to FIGS. 4 and 5, FIG. 4 is a partially enlarged view at part A of the electrode sheet production system 100 shown in FIG. 1; and FIG. 5 is a structural schematic diagram of a marking device 10 provided in some embodiments of the present application. The embodiments of the present application provide a marking device 10, wherein the marking device 10 comprises a vibration mechanism 11 and a cutter head 12. The vibration mechanism 11 is provided on a side of the electrode sheet 20 provided with the active material layer 22 along the thickness direction X of the electrode sheet. The cutter head 12 is connected to the vibration mechanism 11 and the cutter head 12 extends in a width direction Z of the electrode sheet. The vibration mechanism 11 is configured to drive the cutter head 12 to vibrate in a thickness direction X of the electrode sheet and to allow the cutter head 12 to contact the electrode sheet 20, thus forming a score 23 on the electrode sheet 20.

The vibration mechanism 11 serves to drive the cutter head 12 to vibrate along the thickness direction X of the electrode sheet. The structure of the vibration mechanism 11 can be various, for example, an ultrasonic transducer, a cylinder, or an electric actuator.

The cutter head 12 extends along the width direction Z of the electrode sheet, which means that the length direction of the cutter head 12 is the width direction Z of the electrode sheet. Thus, the cutter head 12, under the drive of the vibration mechanism 11, is able to oscillate the active material layer 22 of the electrode sheet 20 along the thickness direction X of the electrode sheet, so as to be able to remove the active material layer 22 corresponding to the cutter head 12 from the current collector 21 of the electrode sheet 20. Therefore, a score 23 is formed on one side of the electrode sheet 20.

Exemplarily, the structure of the cutter head 12 can be various. For example, the cross-section of the cutter head 12 perpendicular to the width direction Z of the electrode sheet can be trapezoidal, semi-circular, or rectangular. The use of the cutter head 12 with this structure can effectively alleviate the damage caused by the cutter head 12 to the current collector 21 of the electrode sheet 20 when extruding the electrode sheet 20, thus enhancing the production quality of the electrode sheet 20.

By arranging the vibration mechanism 11 on the side of the electrode sheet 20 provided with the active material layer 22, the vibration mechanism 11 is enabled to drive the cutter head 12 to oscillate and extrude the active material layer 22 of the electrode sheet 20 along the thickness direction X of the electrode sheet. It is enabled to form a score 23 at the position where the active material layer 22 is extruded, thus satisfying the requirement of stacking. Using this structure, the marking mechanism does not need to mark the electrode sheet 20 through laser marking technology, thereby alleviating the phenomenon of heat-affected zones formed on the electrode sheet 20 after laser ablation. It is conducive to reducing the damage suffered by the electrode sheet 20 during the marking process, which in turn can effectively improve the production quality of the electrode sheet 20. In addition, the use of a vibration mechanism 11 to drive the cutter head 12 to oscillate the active material layer 22 to mark the electrode sheet 20 can be conducive to improving the marking speed of the electrode sheet 20, thereby effectively improving the marking efficiency of the electrode sheet 20.

In some embodiments of the present application, the cutter head 12 is configured to vibrate in the thickness direction X of the electrode sheet and contact the active material layer 22 to reduce or remove the active material layer 22 from the extruded part and form the score 23.

The active material layer 22 at the extruded part is reduced or removed and a score 23 is formed. In other words, the vibration mechanism 11 is able to drive the cutter head 12 to oscillate the active material layer 22 of the electrode sheet 20 along the thickness direction X of the electrode sheet. Therefore, the active substance layer 22 at the position is able to be removed or reduced, thus forming the score 23.

The vibration and extrusion of the active material layer 22 by the cutter head 12 can remove or reduce the active material layer 22 at the corresponding position so as to form a score 23 on one side of the electrode sheet 20. This facilitates the stacking process of the electrode sheet 20 and thus can effectively alleviate the damage suffered by the electrode sheet 20 in the marking process.

According to some embodiments of the present application, with reference to FIG. 4, the cutter head 12 is detachably connected to the vibration 11 mechanism.

The way in which the cutter head 12 is detachably connected to the vibration mechanism 11 can be various. For example, the cutter head 12 can be detachably connected to the vibration mechanism 11 by means of bolting screwing, or snap-fitting.

By detachably connecting the cutter head 12 to the vibration mechanism 11 to realize rapid disassembly and replacement of the cutter head 12, it is beneficial to repair the cutter head 12 in the later use process. Moreover, it is convenient to replace the cutter head 12 of different models to meet the demand for manufacturing different models of electrode sheets 20. For example, it is possible to form scores 23 of different widths on the electrode sheet 20, so as to be able to effectively enhance the scope of applicability of the marking device 10.

According to some embodiments of the present application, the vibration mechanism 11 is an ultrasonic transducer, and the cutter head 12 is connected to an output end of the ultrasonic transducer. The specific structure of the ultrasonic transducer can be found in the related technology and will not be repeated here.

The ultrasonic transducer is used as a vibration mechanism 11 to drive the cutter head 12 to vibrate along the thickness direction X of the electrode sheet, so that the vibration mechanism 11 can drive the cutter head 12 to carry out high-frequency oscillation, with a better vibration effect. Therefore, the cutter head 12 removes the active material layer 22 to be faster, which is in turn conducive to improving the marking efficiency of the marking device 10 on the electrode sheet 20.

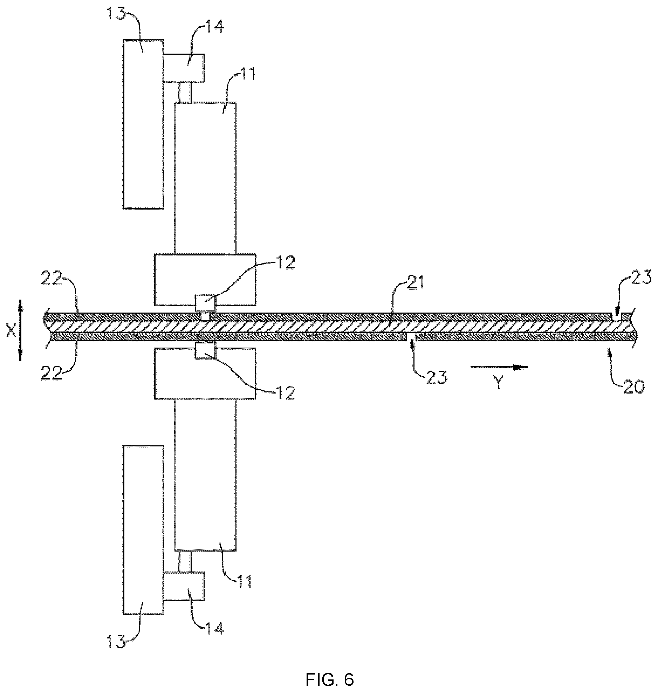

According to some embodiments of the present application, referring to FIG. 6, FIG. 6 is a structural schematic diagram of a marking device 10 provided in some other embodiments of the present application. The marking device 10 further includes a mounting bracket 13. Along the thickness direction X of the electrode sheet, the vibration mechanism 11 is provided on the mounting bracket 13 in a positionally adjustable manner so as to adjust the distance between the cutter head 12 and the electrode sheet 20.

The vibration mechanism 11 is provided on the mounting bracket 13 in a positionally adjustable manner. In other words, the vibration mechanism 11 is movably provided on the mounting bracket 13 in the thickness direction X of the electrode sheet. Therefore, it is possible to realize that the position of the vibration mechanism 11 is adjustable relative to the vibration mechanism 11 along the thickness direction X of the electrode sheet, and thus it is possible to drive the cutter head 12 to move along the thickness direction X of the electrode sheet, so as to realize the function of adjusting the distance between the cutter head 12 and the electrode sheet 20.

Exemplarily, the mounting bracket 13 is provided in one-to-one correspondence with the vibration mechanism 11, and the mounting bracket 13 is provided on one side of the electrode sheet 20 along the thickness direction X of the electrode sheet.

By arranging the vibration mechanism 11 on the mounting bracket 13 in a positionally adjustable manner along the thickness direction X of the electrode sheet, the distance between the cutter head 12 and the electrode sheet 20 can be adjusted so as to meet the demand for marking the electrode sheets 20 of different thicknesses. Moreover, the phenomenon of scratching between the cutter head 12 and the electrode sheet 20 can be effectively reduced, thereby conducive to improving the production quality of the electrode sheets 20.

According to some embodiments of the present application, with reference to FIG. 6, the marking device 10 further comprises an adjusting mechanism 14. The adjusting mechanism 14 is connected to the vibration mechanism 11, and the adjusting mechanism 14 is configured to drive the vibration mechanism 11 to move relative to the mounting bracket 13 along the thickness direction X of the electrode sheet, so as to drive the cutter head 12 closer to or further away from the electrode sheet 20.

The adjusting mechanism 14 is mounted on the mounting bracket 13, and the vibration mechanism 11 is connected to an output end of the adjustment mechanism 14. Thus, the adjusting mechanism 14 is able to drive the vibration mechanism 11 to move along the thickness direction X of the electrode sheet so as to adjust the distance between the cutter head 12 and the electrode sheet 20.

Exemplarily, the adjusting mechanism 14 can be a cylinder, an electric actuator, etc.

The adjusting mechanism 14 can drive the vibration mechanism 11 to automatically move relative to the mounting bracket 13 along the thickness direction X of the electrode sheet, so as to realize automatic adjustment of the distance between the cutter head 12 and the electrode sheet 20. Therefore, it is able to enhance the degree of automation of the marking device 10, which is conducive to saving manpower.

According to some embodiments of the present application, with reference to FIGS. 3, 4, and 5, both sides of the current collector 21 are provided with the active material layer 22 along the thickness direction X of the electrode sheet. The marking device 10 includes two vibration mechanisms 11 and two cutter heads 12. Each side of the electrode sheet 20 is provided with one of the two vibration mechanisms 11 along the thickness direction X of the electrode sheet. Each of the two cutter heads 12 is respectively connected to one of the two vibration mechanisms 11 to form the scores 23 on both sides of the electrode sheet 20.

In the above description, both sides of the electrode sheet 20 are provided with a vibration mechanism 11 and a cutter head 12, thereby enabling the vibration mechanism 11 to drive the corresponding cutter head 12 to remove the active material layer 22 on one side of the electrode sheet 20. Therefore, a score 23 is formed on the corresponding side of the electrode sheet 20.

In FIGS. 4 and 5, the two cutter heads 12 are arranged opposite to each other along the thickness direction X of the electrode sheet. Along the thickness direction X of the electrode sheet, the distance between the two cutter heads 12 is greater than the thickness of the electrode sheet 20. That is, the two vibration mechanisms 11 are respectively arranged on one of the two sides of the electrode sheet 20 in a symmetrical manner. By arranging each of the two cutter heads 12, opposite to each other, on each side of the electrode sheet 20 along the thickness direction X of the electrode sheet, the two cutter heads 12 can cooperate with each other to play a certain supporting role for the electrode sheet 20, and each side of the electrode sheet 20 is formed with the score 23 arranged oppositely so as to facilitate the marking device 10 to mark the score on both sides of the electrode sheet 20, thus effectively improving the quality of the marking. In addition, by setting the distance between the two cutter heads 12 to be greater than the thickness of the electrode sheet 20, the phenomenon of the scraping between the cutter heads 12 and the electrode sheet 20 can be effectively reduced so as to improve the production quality of the electrode sheet 20.

Exemplarily, in FIG. 5, the scores 23 formed on both sides of the electrode sheet 20 are arranged in a staggered manner along the extension direction of the electrode sheet 20. In some embodiments, the scores 23 formed on both sides of the electrode sheet 20 can also be arranged on both sides of the electrode sheet 20 in a symmetrical manner.

It should be noted that in FIG. 5, one vibration mechanism 11 and one cutter head 12 are respectively provided on two sides of the electrode sheet 20. Of course, in other embodiments, both sides of the electrode sheet 20 can also be provided with two, three, or four, etc., vibration mechanisms 11 respectively, and each vibration mechanism 11 is connected to one cutter head 12 correspondingly.

The vibration mechanism 11 is provided on both sides of the electrode sheet 20, and each vibration mechanism 11 is connected with a cutter head 12. Therefore, it is able to meet the marking of both sides of the electrode sheet 20 so as to remove the active material layers 22 on both sides of the electrode sheet 20 and form the scores 23. The structure of the marking device 10 can greatly optimize the production beat of the electrode sheet 20 in the process of marking, which is then conducive to improving the marking efficiency and production efficiency of the electrode sheet 20.

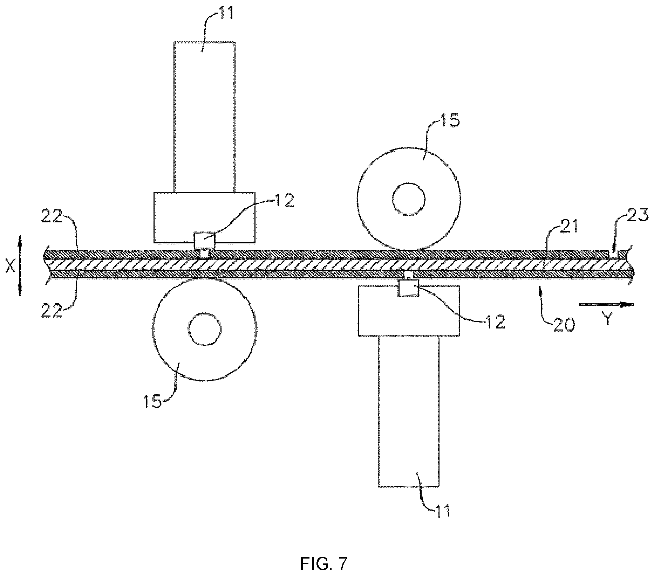

According to some embodiments of the present application, referring to FIG. 7, FIG. 7 is a structural schematic diagram of a marking device 10 provided in some embodiments of the present application. The two cutter heads 12 are provided at intervals along a conveying direction Y of the electrode sheet.

The two cutter heads 12 are arranged at intervals along the conveying direction Y of the electrode sheet. That is to say, the two vibration mechanisms 11 are sequentially arranged along the conveying direction Y of the electrode sheet so that a spacing is provided between the two cutter heads 12 in the conveying direction Y of the electrode sheet. This facilitates the manufacture of a staggered arrangement of the scores 23 on both sides of the electrode sheet 20, with higher manufacturing efficiency.

By arranging the two cutter heads 12 at intervals along the conveying direction Y of the electrode sheet, it is possible to effectively reduce the influence of interference between the two cutter heads 12, and it is easy to mount and debug the vibration mechanism 11 and the cutter head 12. In addition, the marking device 10 with this structure is capable of forming the scores 23 in a staggered arrangement on both sides of the electrode sheet 20 to meet different stacking needs.

In some embodiments of the present application, with reference to FIG. 7, the marking device 10 further comprises a support member 15. The support member 15 is arranged in one-to-one correspondence with the cutter head 12. The support member 15 and the cutter head 12 are oppositely arranged on two sides of the electrode sheet 20 along the thickness direction X of the electrode sheet, and the support member 15 is configured to support the electrode sheet 20.

Each support member 15 is provided in correspondence with a cutter head 12. The support member 15 serves to support the electrode sheet 20, thereby facilitating the cutter head 12 to form a score 23 on the side of the electrode sheet 20 away from the support member 15.

Optionally, along the thickness direction X of the electrode sheet, the distance between the support member 15 and the cutter head 12 is greater than the thickness of the electrode sheet 20, i.e., the minimum distance between the support member 15 and the cutter head 12 in the thickness direction X of the electrode sheet. By setting the distance between the support member 15 and the cutter head 12 to be greater than the thickness of the electrode sheet 20, the phenomenon of the scraping between the cutter heads 12 and the electrode sheet 20 can be effectively reduced so as to improve the production quality of the electrode sheet 20.

Exemplarily, in FIG. 7, the support member 15 is a roller provided on the side of the electrode sheet 20 away from the cutter head 12. The use of the support member 15 of this structure facilitates the reduction of friction between the electrode sheet 20 and the support member 15, thereby facilitating the reduction of damage to the electrode sheet 20. Of course, in other embodiments, the support member 15 can also be a support plate or a support block, for example.

By arranging a support member 15 corresponding to each cutter head 12 and arranging the support member 15 and the cutter head 12 relative to each other along the thickness direction X of the electrode sheet, the support member 15 can play a better supporting role in the process during which the cutter head 12 marks the electrode sheet 20, which is conducive to improving the quality of the marking of the electrode sheet 20.

According to some embodiments of the present application, the embodiments of the present application also provide an electrode sheet production system 100. Referring to FIGS. 1 and 2, the electrode sheet production system 100 comprises a conveying device and a marking device 10 provided in any one of the above embodiments, wherein the conveying device is configured for conveying the electrode sheet production system 20.

Exemplarily, the conveying device can be a roller conveyor or a plate chain conveyor. The conveying device is configured to provide a driving force for the electrode sheet 20 to drive the electrode sheet 20 to be able to move in the conveying direction Y of the electrode sheet thereof. The specific structure of the conveying device can be found in the related technology and will not be repeated here.

According to some embodiments of the present application, with reference to FIG. 1 and FIG. 2, the electrode sheet production system 100 further comprises a dust removal device 30. The dust removal device 30 is provided downstream to the marking device 10 along the conveying direction Y of the electrode sheet, wherein the dust removal device 30 is configured to dust the side of the electrode sheet 20 provided with the cutter head 12.

The dust removal device 30 is provided downstream to the marking device 10 along the conveying direction Y of the electrode sheet. In other words, the marking device 10 and the dust removal device 30 are sequentially arranged along the conveying direction Y of the electrode sheet. That is to say, the production process sequence is that the electrode sheet 20 first passes through the marking device 10 and then passes through the dust removal device 30.

Optionally, the dust removal device 30 can be a variety of devices, such as an ultrasonic dust removal device, a negative pressure suction device, or an adhesion device. The suction device is configured for extracting dust adhered to the surface of the electrode sheet 20, and the adhesion device is configured for adhering the dust adhered to the surface of the electrode sheet 20.

The electrode sheet production system 100 is further provided with a dust removal device 30 and the dust removal device 30 is provided downstream to the marking device 10, so that the dust removal device 30 is capable of removing dust from the side of the electrode sheet 20 provided with the score 23 so as to reduce the dust attached to the electrode sheet 20 after the marking process is complete, which is, in turn, conducive to improving the production quality of the electrode sheet production system 20.

According to some embodiments of the present application, with reference to FIGS. 1 and 2, the dust removal device 30 comprises a support roller 31 and an ultrasonic duster 32. The ultrasonic duster 32 and the support roller 31 are oppositely arranged on two sides of the electrode sheet 20 along the thickness direction X of the electrode sheet, and the ultrasonic duster 32 and the cutter head 12 are arranged on the same side of the electrode sheet 20.

The support roller 31 is provided on a side of the electrode sheet 20 away from the ultrasonic duster 32, and the support roller 31 serves to support the electrode sheet 20. This facilitates the ultrasonic duster 32 to dust the side of the electrode sheet 20 on which the score 23 is formed. The ultrasonic duster 32 is a device that utilizes dusty gas to enable resonance of dust particles under acoustic vibration, causing the dust particles to collide with each other so as to coalesce into larger particles and then settle down, thus achieving the effect of dust removal. The specific structure of the ultrasonic duster 32 can be found in the relevant technology, and will not be repeated herein.

It is to be noted that, in other embodiments, the dust removal device 30 can also be of other structures. For example, the dust removal device 30 includes a support roller 31 and a negative pressure suction mechanism, wherein the negative pressure suction mechanism and the support roller 31 are respectively arranged, opposite to each other, on both sides of the electrode sheet 20 along the thickness direction X of the electrode sheet. The negative pressure suction mechanism and the cutter head 12 are arranged at the same side of the electrode sheet 20, and the negative pressure suction mechanism is configured to suction air to the side of the electrode sheet 20 where the score 23 is formed, thereby dusting the electrode sheet 20.

The support roller 31 is provided on one side of the electrode sheet 20 and the ultrasonic duster 32 is arranged on the other side of the electrode sheet 20 at a location corresponding to the support roller 31, so as to enable the ultrasonic duster 32 to remove the dust on the side of the electrode sheet 20 provided with the score 23. The dust removal device 30 with this structure can, on the one hand, increase the effect of dust removal of the electrode sheet 20. On the other hand, it can reduce the damage to the electrode sheet 20 caused by the dust removal device 30 in the process of dust removal.

According to some embodiments of the present application, referring to FIGS. 1 and 2, the electrode sheet production system 100 comprises two dust removal devices 30, wherein the two dust removal devices 30 are arranged at intervals along the conveying direction Y of the electrode sheet, and the ultrasonic dusters 32 of the two dust removal devices 30 are respectively arranged on each side of the electrode sheet 20 in the thickness direction X of the electrode sheet.

Two dust removal devices 30 are sequentially arranged downstream to the marking device 10 along the conveying direction Y of the electrode sheet, and two ultrasonic dusters 32 are arranged on both sides of the electrode sheet 20 to dust both sides of the electrode sheet 20.

Two dust removal devices 30 are sequentially arranged downstream to the marking device 10 along the conveying direction Y of the electrode sheet, and the ultrasonic dusters 32 of the two dust removal devices 30 are respectively located on each side of the electrode sheet 20 so as to be able to remove the dust on both sides of the electrode sheet 20, which is conducive to further improving the quality of dust removing on the electrode sheet 20.

According to some embodiments of the present application, with reference to FIGS. 1 and 2, the electrode sheet production system 100 further comprises a labeling device 40 and a detecting device. The labeling device 40 is provided upstream to the marking device 10 along the conveying direction Y of the electrode sheet, wherein the labeling device 40 is configured to form a label on the electrode sheet 20 at the location to be marked. The detecting device is provided between the labeling device 40 and the marking device 10 along the conveying direction Y of the electrode sheet. The detecting device is configured to detect the label and generate a control signal, and the marking device 10 is configured to form a score 23 at the location to be marked according to the control signal.

The labeling device 40 is provided upstream to the marking device 10 along the conveying direction Y of the electrode sheet. In other words, the labeling device 40 and the marking device 10 are sequentially arranged along the conveying direction Y of the electrode sheet. That is to say, the production process sequence is that the electrode sheet 20 first passes through the labeling device 40 and then passes through the marking device 10.

The labeling device 40 is configured to form a label on the electrode sheet 20 at the location to be marked. The label can be of various kinds, such as a dot labelled on the electrode sheet 20 at the location to be marked, a hole made on the electrode sheet 20 at the location to be marked, and of course, a scratch and the like formed on the electrode sheet 20 at the location to be marked.

Optionally, the detecting device can be an infrared sensor, a photosensitive sensor, or a distance sensor, among others. The detecting device is configured to detect the label formed on the electrode sheet 20 by the labeling device 40 and to transmit the produced control signal to the marking device 10, thus facilitating the marking of the electrode sheet 20 by the marking device 10.

The electrode sheet production system 100 is further provided with a labeling device 40 and a detecting device. The labeling device 40 can label the electrode sheet 20 at the location to be marked, and detect and feedback through the detecting device. Therefore, the vibration mechanism 11 can drive the cutter head 12 to form a score 23 on the electrode sheet 20 at the location to be marked. Thus, it can effectively improve the marking precision of the electrode sheet 20, which is conducive to improving the production quality of the electrode sheet 20.

According to some embodiments of the present application, with reference to FIG. 1 and FIG. 2, the labeling device 40 further comprises a hole-making mechanism 41. The hole-making mechanism 41 is configured to form an identification hole on the electrode sheet 20 at the location to be marked, and the detecting device is configured to detect the identification hole and generate the control signal.

The hole-making mechanism 41 is provided on one side of the electrode sheet 20, and the hole-making mechanism 41 is configured to punch holes on the electrode sheet 20 at the location to be marked, thereby forming an identification hole. The identification hole is the label formed on the electrode sheet 20 by the labeling device 40. The specific structure of the hole-making mechanism 41 can be found in the related technology and will not be repeated here.

Exemplarily, two hole-making mechanisms 41 are provided, and the two hole-making mechanisms 41 are arranged at intervals along the width direction Z of the electrode sheet, thus forming two identification holes on the electrode sheet 20. This contributes to the improvement of the detection accuracy of the detecting device.

In some embodiments, the labeling device 40 further comprises a waste material box 42, wherein the waste material box 42 is provided on a side of the electrode sheet 20 away from the hole-making mechanism 41. The waste material box 42 is configured to receive waste material produced by the electrode sheet 20 during the process of forming the identification holes, thus reducing the risk of scattering of the waste material.

The hole-making mechanism 41 is used as a labeling device 40 to open an identification hole on the electrode sheet 20 at the location to be marked, thereby labeling the electrode sheet 20 at the location to be marked. The structure of the labeling device 40 is simple and easy to realize, which facilitates detection of the identification holes, formed at the location to be marked, by the detecting device. Thus, the detecting accuracy of the detecting device can be effectively improved.

According to some embodiments of the present application, with reference to FIGS. 1 to 5, the present application provides a marking device 10. The marking device 10 includes two vibration mechanisms 11 and two cutter heads 12. Each side of the electrode sheet 20 is provided with one of the two vibration mechanisms 11 along the thickness direction X of the electrode sheet. Each of the two cutter heads 12 is detachably connected to one of the two vibration mechanisms 11, respectively. The cutter head 12 extends in a width direction Z of the electrode sheet. Moreover, the distance between the two cutter heads 12 is greater than the thickness of the electrode sheet 20. The vibration mechanism 11 is configured to drive the corresponding cutter head 12 to vibrate along the thickness direction X of the electrode sheet, thus removing the active material layer 22 of the electrode sheet 20 and to form the score 23. The vibration mechanism 11 is an ultrasonic transducer.

It should be noted that, without conflict, the embodiments and features described in the embodiments of the present application can be combined with each other.

The above are only preferred embodiments of the present application, which is not intended to limit, and the present application can have various changes and variations for those skilled in the art. Any modification, equivalent substitution, improvement, etc. made within the spirit and principles of the present application shall be included in the scope of protection of the present application.

## Claims

1. A marking device, configured for making scores on an electrode sheet, wherein the electrode sheet comprises a current collector and an active material layer; at least one side of the current collector is provided with the active material layer along a thickness direction of the electrode sheet; and the marking device comprises:
a vibration mechanism, provided on a side of the electrode sheet provided with the active material layer along the thickness direction; and
a cutter head, connected to the vibration mechanism, wherein the cutter head extends in a width direction of the electrode sheet; and the vibration mechanism is configured to drive the cutter head to vibrate in the thickness direction and to allow the cutter head to contact the electrode sheet, to form a score on the electrode sheet.

2. The marking device according to claim 1, wherein the cutter head is configured to vibrate in the thickness direction and contact the active material layer so as to reduce or remove the active material layer from an extruded part and form the score.

3. The marking device according to claim 1 or 2, the cutter head is detachably connected to the vibration mechanism.

4. The marking device according to any one of claims 1 to 3, wherein the vibration mechanism is an ultrasonic transducer.

5. The marking device according to any one of claims 1 to 4, wherein the marking device further comprises:
a mounting bracket, wherein the vibration mechanism, along the thickness direction, is provided on the mounting bracket in a positionally adjustable manner so as to adjust a distance between the cutter head and the electrode sheet.

6. The marking device according to claim 5, wherein the marking device further comprises: an adjusting mechanism, connected to the vibration mechanism, wherein the adjusting mechanism is configured to drive the vibration mechanism to move relative to the mounting bracket along the thickness direction, so as to drive the cutter head closer to or further away from the electrode sheet.

7. The marking device according to any one of claims 1 to 6, wherein the active material layer is provided on both sides of the current collector along the thickness direction; and the marking device comprises:
two vibration mechanisms, each provided on each side of the electrode sheet along the thickness direction; and
two cutter heads, each connected to one of the two vibration mechanisms to form the score on the both sides of the electrode sheet.

8. The marking device according to claim 7, the two cutter heads are provided at intervals along a conveying direction of the electrode sheet.

9. The marking device according to any one of claims 1 to 8, wherein the marking device further comprises:
a support member, provided in one-to-one correspondence with the cutter head, wherein the support member and the cutter head are oppositely arranged on two sides of the electrode sheet along the thickness direction, and the support member is configured to support the electrode sheet.

10. The marking device according to claim 7, wherein the two cutter heads are oppositely provided along the thickness direction; and
a distance between the two cutter heads along the thickness direction is greater than a thickness of the electrode sheet.

11. An electrode sheet production system, comprising:
the marking device according to any one of claims 1 to 10; and
a conveying device, configured for conveying the electrode sheet.

12. The electrode sheet production system according to claim 11, wherein the electrode sheet production system further comprises:
a dust removal device, provided downstream to the marking device along a conveying direction of the electrode sheet, wherein the dust removal device is configured to dust a side of the electrode sheet provided with the cutter head.

13. The electrode sheet production system according to claim 12, wherein the dust removal device comprises:
a support roller; and
an ultrasonic duster, wherein the ultrasonic duster and the support roller are oppositely arranged on two sides of the electrode sheet along the thickness direction of the electrode sheet, and the ultrasonic duster and the cutter head are arranged on the same side of the electrode sheet.

14. The electrode sheet production system according to claim 13, wherein the electrode sheet production system comprises:
two dust removal devices, wherein the two dust removal devices are arranged at intervals along the conveying direction, and ultrasonic dusters of the two dust removal devices are respectively arranged on each side of the electrode sheet along the thickness direction.

15. The electrode sheet production system according to any one of claims 11 to 14, wherein the electrode sheet production system further comprises:
a labeling device, provided upstream to the marking device along the conveying direction of the electrode sheet, wherein the labeling device is configured to form a label on the electrode sheet at a location to be marked; and
a detecting device, provided between the labeling device and the marking device along the conveying direction, wherein the detecting device is configured to detect the label and generate a control signal; and the marking device is configured to form the score at the location to be marked according to the control signal.

16. The electrode sheet production system according to claim 15, wherein the labeling device comprises:
a hole-making mechanism, configured to form an identification hole on the electrode sheet at the location to be marked, and the detecting device is configured to detect the identification hole and generate the control signal.
